# EUROPÄISCHE PATENTANMELDUNG

(11) **EP 4 462 955 A1**
(43) Veröffentlichungstag der Anmeldung: **13.11.2024**
(21) Anmeldenummer: 24174083.6
(22) Anmeldetag: 03.05.2024
(51) Int. Cl.: H05B 47/18, B60Q 3/47

(54) **VERFAHREN UND VORRICHTUNG ZUR BELEUCHTUNGSSTEUERUNG SOWIE SYSTEM**

(30) Priorität: 08.05.2023 DE 102023204215
(71) Anmelder: Siemens Mobility GmbH, 81739 München (DE)
(72) Erfinder: Arndt, Igor, 91056 Erlangen (DE); Kosthorst, Kathrin, 46397 Bocholt (DE); Schneider, Vitali, 91233 Neunkirchen am Sand (DE); Wolf, Günter, 90425 Nürnberg (DE)
(74) Vertreter: Siemens Patent Attorneys

(57) **Zusammenfassung**

Die vorliegende Erfindung betrifft ein Verfahren (100) und eine Vorrichtung (1) zur Beleuchtungssteuerung in einem Fahrzeug (50), insbesondere Schienenfahrzeug, sowie ein Beleuchtungssystem (10) und ein Fahrzeug (50) mit einem solchen Beleuchtungssystem (10). Eine Steuerkomponente (20) sendet (S3) Beleuchtungsdaten über eine Datenverbindung (60) an wenigstens eine separate Treiberkomponente (30). Die Treiberkomponente (30) sendet (S4) dann auf Grundlage der Beleuchtungsdaten ein Steuersignal über eine Signalverbindung (70) an wenigstens ein Leuchtmittel (40).

## Beschreibung

Die vorliegende Erfindung betrifft ein Verfahren und eine Vorrichtung zur Beleuchtungsteuerung in einem Fahrzeug, insbesondere Schienenfahrzeug, sowie ein Beleuchtungssystem und ein Fahrzeug mit einem solchen Beleuchtungssystem.

In modernen Fahrzeugen zum Passagiertransport, zum Beispiel in Zügen oder Bussen, können einzelne Leuchtmittel oder zumindest Leuchtmittelgruppen häufig gezielt angesteuert werden. Dadurch lassen sich verschiedene Beleuchtungsszenarien realisieren, die einerseits dem Komfort der Passagiere, andererseits aber auch deren Information dienen können. Beispielsweise kann eine gedeckte Beleuchtung bei einer Abend- oder Nachtfahrt bei Erreichen eines Halts aufgehellt werden, um den Passagieren das Aus- oder Einsteigen zu ermöglichen. In einem anderen Beispiel kann die Beleuchtung bei Ausgabe einer Fahrgastinformation geändert werden. Hierdurch lassen sich Aufmerksamkeit erzeugen oder Inhalte der Durchsage veranschaulichen, etwa indem bei einem Hinweis auf Notausgänge oder andere spezifische Fahrzeugmerkmale diese durch Spotleuchten angeleuchtet werden.

Gruppen der Leuchtmittel, zum Beispiel alle Leuchtmittel in einem Fahrzeugabschnitt wie etwa einem Wagen oder Abteil, werden dabei durch Lichtsteuereinheiten (englisch "Light Control Unit", LCU) gesteuert. Diese Lichtsteuereinheiten können Steuerbefehle empfangen und Betriebsdaten des Fahrzeugs verarbeiten, um entsprechende Szenarien mit den angeschlossenen Leuchtmitteln zu realisieren. Gleichzeitig dienen diese Lichtsteuereinheiten auch der Überwachung der angeschlossenen Leuchtmittel und können entsprechende Diagnosedaten ausgeben, zum Beispiel an eine zentrale Fahrzeugsteuerung. Dazu benötigen die Lichtsteuereinheiten entsprechend leistungsfähige Datenverarbeitungsmittel, was mit Kosten verbunden ist. Da pro Fahrzeug mehrere dieser Lichtsteuereinheiten vorgesehen sein müssen, die alle unabhängig voneinander arbeiten, kann es außerdem zu relativen Verzögerungen beim Realisieren der Beleuchtungsszenarien in unterschiedlichen Fahrzeugabschnitten kommen.

Vor diesem Hintergrund ist es eine Aufgabe der vorliegenden Erfindung, die Beleuchtungssteuerung in Fahrzeugen zu verbessern, insbesondere die Beleuchtung in unterschiedlichen Fahrzeugabschnitten zu synchronisieren.

Diese Aufgabe wird gelöst durch ein Verfahren und eine Vorrichtung zur Beleuchtungssteuerung in einem Fahrzeug, insbesondere Schienenfahrzeug, sowie ein Beleuchtungssystem und ein Fahrzeug mit einem solchen Beleuchtungssystem gemäß den unabhängigen Ansprüchen.

Bevorzugte Ausführungsformen sind Gegenstand der unabhängigen Ansprüche und der vorliegenden Beschreibung.

Bei einem Verfahren zur Beleuchtungssteuerung in einem Fahrzeug, insbesondere Schienenfahrzeug, gemäß einem ersten Aspekt der Erfindung sendet eine, insbesondere zentrale, Steuerkomponente Beleuchtungsdaten über eine Datenverbindung an wenigstens eine separate Treiberkomponente, vorzugsweise mehrere separate Treiberkomponenten. Die Treiberkomponente sendet dann auf Grundlage der Beleuchtungsdaten ein Steuersignal über eine, insbesondere lokale, Signalverbindung an wenigstens ein Leuchtmittel.

Eine von einer Lichtsteuerung separate Treiberkomponente im Sinne der Erfindung ist vorzugsweise eine Treiberkomponente, die von der Steuerkomponente räumlich getrennt angeordnet und/oder unabhängig von der Steuerkomponente betreibbar ist. Lichtsteuerung und Treiberkomponente sind also vorzugsweise nicht in demselben Gehäuse angeordnet und/oder nicht über eine interne Schnittstelle gekoppelt.

Beleuchtungsdaten im Sinne der vorliegenden Erfindung sind vorzugsweise Daten, die ein - zum Beispiel von der Steuerkomponente ermitteltes - Beleuchtungsszenario charakterisieren. Beleuchtungsdaten können beispielsweise eine Information bezüglich der Art und/oder Anzahl der einzusetzenden Leuchtmittel, eine Information bezüglich der einzustellenden Helligkeit der Leuchtmittel und/oder eine Information bezüglich der einzustellenden Farbe der Leuchtmittel enthalten.

Ein Aspekt der Erfindung basiert auf dem Ansatz, die Daten- und Signalverarbeitungsaufgaben einer konventionellen Lichtsteuereinheit aufzuteilen. Erfindungsgemäß wird dies erreicht durch eine Steuerkomponente, die über eine Datenverbindung mit wenigstens einer Treiberkomponente verbunden ist. Die Steuerkomponente ist vorzugsweise zum Festlegen eines Beleuchtungsszenarios eingerichtet. Die Steuerkomponente verarbeitet beispielsweise Daten und/oder externe Steuerungsbefehle, auf deren Grundlage die Fahrzeugbeleuchtung erfolgen soll. Die Steuerkomponente kann diese Daten bzw. Steuerungsbefehle beispielsweise nutzen, um ein Beleuchtungsszenario zu ermitteln. Insofern kann auch von einer "Planung" des Beleuchtungsszenarios auf Grundlage bereitgestellter Informationen oder Befehle durch die Steuerkomponente gesprochen werden. Steht das Beleuchtungsszenario dann fest, wird es vorzugsweise von der wenigstens einen Treiberkomponente umgesetzt. Beispielsweise können auf Grundlage von Beleuchtungsdaten, die das festgelegte Beleuchtungsszenario charakterisieren und von der Steuerkomponente etwa über ein Fahrzeugnetzwerk zentral bereitgestellt werden, an die Treiberkomponente angeschlossene Leuchtmittel entsprechend Steuersignalen angesteuert werden. Dazu gibt die Treiberkomponente zweckmäßigerweise entsprechende Steuersignale, etwa über einen lokalen Bus, an die Leuchtmittel aus.

Eine einzige, zentrale Steuerkomponente kann folglich die Beleuchtung im gesamten Fahrzeug zentral verwalten, auch wenn die Beleuchtung durch über das gesamte Fahrzeug verteilte, insbesondere in unterschiedlichen Fahrzeugabschnitten angeordnete, Leuchtmittel realisiert wird. Vorzugsweise veranlasst die Steuerkomponente dabei die wenigstens eine Treiberkomponente zur entsprechenden Ansteuerung der an sie angeschlossenen Leuchtmittel.

Beispielsweise kann von oder über eine Zugsteuerung (englisch "Train Control and Management System", TCMS) ein Steuerungsbefehl zum Wechsel auf eine Reinigungsbeleuchtung ergehen. Vorzugsweise wählt die Steuerkomponente dann gemäß der Kriterien der Reinigungsbeleuchtung im betreffenden Zug die zum Realisieren der Reinigungsbeleuchtung notwendigen Leuchtmittel aus und legt eine bedarfsgerechte Helligkeit fest. Notwendige Leuchtmittel sind vorzugsweise alle Leuchtmittel, die für das ausgewählte Beleuchtungsszenario in ihrer Farbe, Helligkeit, etc., geändert, insbesondere gegebenenfalls auch ausgeschaltet, werden müssen. Die damit korrespondierenden Beleuchtungsdaten, welche das Beleuchtungsszenario "Reinigungsbeleuchtung" charakterisieren, erlauben es in der Folge Treiberkomponenten im gesamten Zug, an die Treiberkomponenten angeschlossene Leuchtmittel gemäß der Kriterien anzusteuern. Alternativ kann die Zugsteuerung anstelle des Steuerbefehls auch Prozessdaten zur Verfügung stellen, anhand derer die Steuerkomponente dann eigenständig ein adäquates Beleuchtungsszenario ermittelt.

Mit der Trennung der Steuerkomponente von der wenigstens einen Treiberkomponente ist auch ein flexibler Aufbau eines Beleuchtungssystems möglich. Insbesondere können zusätzliche Leuchtmittel, die von einer Treiberkomponente ansteuerbar sind, aufwandsarm und günstig in ein Fahrzeug integriert werden. Beispielsweise ist hierbei die Installation zusätzlicher Rechenleistung nicht notwendig. Folglich sind auch Redundanzen leichter realisierbar.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer bevorzugten Ausführungsform empfängt die Steuerkomponente Betriebsdaten des Fahrzeugs. Vorzugsweise ermittelt die Steuerkomponente auf Grundlage dieser Betriebsdaten ein Beleuchtungsszenario. Beispielsweise kann die Steuerkomponente auf Grundlage der Betriebsdaten eines von mehreren, insbesondere vorgegebenen, Beleuchtungsszenarien auswählen. Zweckmäßigerweise wird dabei ein Beleuchtungsszenario ausgewählt, welches für einen durch die Betriebsdaten charakterisierten Betriebszustand vorgegeben ist. Dadurch lässt sich sicherstellen, dass das Beleuchtungsszenario dem Betriebszustand des Fahrzeugs entspricht.

Wie voranstehend bereits angedeutet können Betriebsdaten einen Betriebszustand des Fahrzeugs charakterisieren. Betriebsdaten können beispielsweise eine Zeitinformation wie etwa ein Datum oder eine Uhrzeit, eine Fahrplaninformation, eine Positionsinformation, eine Geschwindigkeitsinformation, eine Diagnoseinformation betreffend die Funktionstüchtigkeit des Fahrzeugs und/oder dergleichen enthalten. Betriebsdaten können auch einen Steuerbefehl zum Wechsel des Beleuchtungsszenarios enthalten, der zum Beispiel von einer Zugsteuerung oder einem Fahrzeugführer erteilt wird.

Vorzugsweise sendet die Steuerkomponente dann Beleuchtungsdaten an die Treiberkomponente, die durch das ermittelte Beleuchtungsszenario charakterisiert sind. Dabei können die Beleuchtungsdaten auf Grundlage des ermittelten Beleuchtungsszenarios erzeugt oder daraus abgeleitet werden. Dadurch kann ein dem Betriebszustand des Fahrzeugs entsprechendes Beleuchtungsszenario zuverlässig umgesetzt werden.

In einer weiteren bevorzugten Ausführungsform ruft die Steuerkomponente eine auf einem Speichermittel gespeicherte Beleuchtungstopologie ab. Zweckmäßigerweise erzeugt die Steuerkomponente auf Grundlage der Beleuchtungstopologie und/oder der Betriebsdaten die Beleuchtungsdaten. Eine Beleuchtungstopologie charakterisiert hierbei vorzugsweise die Beleuchtungsoptionen im Fahrzeug. Die Beleuchtungstopologie kann beispielsweise eine Information über die Anordnung von Leuchtmitteln im Fahrzeug, insbesondere in verschiedenen Fahrzeugabschnitten, enthalten. Die Beleuchtungstopologie kann insbesondere eine Liste aller Leuchtmittel mit deren Positionen im Fahrzeug bzw. dem Fahrzeugabschnitt umfassen. Alternativ oder zusätzlich kann die Beleuchtungstopologie auch eine Information zu den Eigenschaften der Leuchtmittel wie zum Beispiel deren maximale Helligkeit, mögliche Farben und/oder dergleichen enthalten. Die Beleuchtungstopologie kann auch eine Information darüber enthalten, wie einzelne Leuchtmittel anzusteuern sind bzw. wie eine Ansteuerung über eine Treiberkomponente veranlasst werden kann. Die Steuerkomponente kann ein ermitteltes Beleuchtungsszenario somit zuverlässig durch eine Veranlassung der Treiberkomponenten zur gezielten Ansteuerung einzelner Leuchtmittel umsetzen.

In einer weiteren bevorzugten Ausführungsform sendet die Treiberkomponente bei einem, insbesondere erstmaligen, Herstellen der Datenverbindung mit der Steuerkomponente Konfigurationsdaten über die Datenverbindung an die Steuerkomponente. Die Konfigurationsdaten charakterisieren zweckmäßigerweise die Konfiguration der Treiberkomponente. Die Konfigurationsdaten können beispielsweise eine Information über die an die Steuerkomponente angeschlossenen Leuchtmittel, die Eigenschaften dieser Leuchtmittel, die Anordnung der Leuchtmittel im Fahrzeug, insbesondere Fahrzeugabschnitt, und/oder dergleichen enthalten. Die Konfigurationsdaten können auch eine Information darüber enthalten, wie einzelne, an die Treiberkomponente angeschlossene Leuchtmittel anzusteuern sind bzw. wie eine Ansteuerung über die Treiberkomponente veranlasst werden kann. Eine derartige Anmeldung der Treiberkomponente bei der Steuerkomponente erhöht die Flexibilität bei der Beleuchtung oder Beleuchtungsplanung in einem Fahrzeug. Beispielsweise kann eine Integration von weiteren Treiberkomponenten und daran angeschlossenen Leuchtmitteln einfacher und effizienter durchgeführt werden. So kann etwa bei der Änderung der Fahrzeugkonfiguration, etwa durch Anhängen eines weiteren Wagens an einen Zug, die dadurch neu hinzugefügten Treiberkomponenten und daran angeschlossene Leuchtmittel von der Steuerkomponente adressiert werden.

In einer weiteren bevorzugten Ausführungsform enthalten die Konfigurationsdaten eine Information zu den von der Treiberkomponente steuerbaren Leuchtmitteln. Die Konfigurationsdaten können zum Beispiel eine Information zur Adressierung des Leuchtmittels über die Signalverbindung enthalten. Gegebenenfalls können die Konfigurationsdaten auch eine Information zu Steuerungsmöglichkeiten des Leuchtmittels und/oder dessen Eigenschaften wie maximale Helligkeit, mögliche Farben und/oder dergleichen enthalten. Mit dieser Information kann die Steuerkomponente nicht nur neu hinzugefügte Treiberkomponenten und daran angeschlossene Leuchtmittel gezielt zum Realisieren eines ermittelten Beleuchtungsszenarios veranlassen, sondern auch die auf dem Speichermittel gespeicherte Beleuchtungstopologie verwalten, insbesondere ergänzen.

In einer weiteren bevorzugten Ausführungsform leitet die Treiberkomponente die über die Datenverbindung empfangenen Beleuchtungsdaten über eine lokale Kommunikationsverbindung, insbesondere die Signalverbindung, an wenigstens eine mit der Treiberkomponente in der lokalen Kommunikationsverbindung in Reihe geschalteten weiteren Treiberkomponente weiter. Unter einer Weiterleitung von Beleuchtungsdaten ist hierbei vorzugsweise auch eine Weiterleitung einer aus den Beleuchtungsdaten abgeleiteten Beleuchtungsinformation zu verstehen. Diese Beleuchtungsinformation kann beispielsweise eine Information zur Adressierung von Leuchtmitteln, die an die in Reihe geschaltete weitere Treiberkomponente angeschlossen sind, enthalten. Neben der Information zur Adressierung enthält die Beleuchtungsinformation zweckmäßigerweise auch weitere Steuerungsinformationen wie zum Beispiel gewünschte Helligkeit, gewünschte Farbe und/oder dergleichen.

Durch das Weiterleiten der Beleuchtungsdaten bzw. Beleuchtungsinformation über die lokale Kommunikationsverbindung, insbesondere die Signalverbindung, kann ein sogenanntes Daisy-Chaining, d. h. eine Kette von Treiberkomponenten, realisiert werden. Dies kann die Netzwerkadministration erleichtern oder zumindest den Aufwand bei der Vernetzung der Treiberkomponenten verringern. Insbesondere müssen dann nicht mehr alle Treiberkomponenten direkt an die Datenverbindung angeschlossen sein oder werden. Insbesondere kann vorgesehen sein, dass nur eine Treiberkomponente pro Fahrzeugabschnitt direkt an die Datenverbindung angeschlossen ist oder wird. Die jeweils dahinter in Reihe geschalteten weiteren Treiberkomponenten erhalten die zur Realisierung des Beleuchtungsszenarios notwendigen Informationen über eine von der Datenverbindung verschiedene lokale Kommunikationsverbindung, insbesondere die Signalverbindung, zum Beispiel einen Bus.

Eine Vorrichtung zur Beleuchtungssteuerung in einem Fahrzeug, insbesondere Schienenfahrzeug, gemäß einem zweiten Aspekt der Erfindung weist eine, insbesondere zentrale, Steuerkomponente und wenigstens eine separate Treiberkomponente auf. Die Steuerkomponente ist mit der wenigstens einen Treiberkomponente datenverbunden. Die Steuerkomponente ist dazu eingerichtet, Beleuchtungsdaten, welche zweckmäßigerweise ein Beleuchtungsszenario charakterisieren, über die Datenverbindung an die Treiberkomponente zu senden. Die Treiberkomponente ist dazu eingerichtet, auf Grundlage der Beleuchtungsdaten ein Steuersignal an wenigstens ein mit der Treiberkomponente signalverbundenes Leuchtmittel zu senden. Dies ermöglicht die zentrale Schaltung und Verwaltung von lokal im Fahrzeug angeordneten Leuchtmitteln. Durch die (zentrale) Steuerkomponente und die separaten Treiberkomponenten ist insbesondere ein modularer Aufbau eines Beleuchtungssystems möglich. Insbesondere könne weitere Treiberkomponenten und daran angeschlossene Leuchtmittel aufwandsarm hinzugefügt werden. Dadurch, dass auch für eine Vielzahl an Treiberkomponenten mit daran angeschlossenen Leuchtmitteln nur eine zentrale Steuerkomponente vorgesehen ist und nur die Steuerkomponente eine nennenswerte Rechenleistung z. B. zur Ermittlung eines Beleuchtungsszenarios benötigt, können Kosten eingespart werden. Zusätzlich sind mit der erfindungsgemäßen Vorrichtung auch leicht Redundanzen realisierbar. Beispielsweise können redundante Treiberkomponenten vorgesehen sein, ohne dass dies den Aufbau der Vorrichtung signifikant kompliziert oder hohe zusätzliche Kosten verursacht.

Eine Steuerkomponente im Sinne der vorliegenden Erfindung kann hard- und/oder softwaretechnisch ausgebildet sein. Die Steuerkomponente kann insbesondere eine, vorzugsweise mit einem Speicher- und/oder Bussystem daten- bzw. signalverbundene, Verarbeitungseinheit aufweisen. Beispielsweise kann die Steuerkomponente eine Mikroprozessoreinheit (CPU) oder ein Modul einer solchen und/oder ein oder mehrere Programme oder Programmmodule aufweisen. Die Steuerkomponente kann dazu ausgebildet sein, Befehle, die als ein in einem Speichersystem oder einer Speichervorrichtung abgelegtes Programm implementiert sind, abzuarbeiten, Eingangssignale von einem Datenbus zu erfassen und/oder Ausgangssignale an einen Datenbus abzugeben. Ein Speichersystem oder eine Speichervorrichtung kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren verkörpert bzw. auszuführen imstande ist, so dass die Steuerkomponente zumindest einige Schritte solcher Verfahren ausführen kann und damit insbesondere die Beleuchtung in einem Fahrzeug steuern oder die Steuerung über die Treiberkomponenten zumindest veranlassen kann.

In einer bevorzugten Ausführungsform enthalten die Beleuchtungsdaten eine Information zur Adressierung wenigstens eines Leuchtmittels, eine Information zu einer Helligkeit und/oder eine Information zu einer Farbe. Die Beleuchtungsdaten können insbesondere eine Information enthalten, welche die Treiberkomponente zur gezielten Steuerung des Leuchtmittels veranlasst. Die Steuerkomponente kann dadurch ein Beleuchtungsszenario zuverlässig durch gezieltes Veranlassen einer gewünschten Ansteuerung einzelner, an die wenigstens eine Treiberkomponente angeschlossenen Leuchtmittel umsetzen.

In einer weiteren bevorzugten Ausführungsform ist ein Speichermittel vorgesehen. Auf dem Speichermittel ist zweckmäßigerweise eine Beleuchtungstopologie des Fahrzeugs gespeichert. Die Steuerkomponente ist bevorzugt zum Erzeugen der Beleuchtungsdaten auf Grundlage der Beleuchtungstopologie eingerichtet. Insbesondere kann die Steuerkomponente dazu eingerichtet sein, mittels der Beleuchtungstopologie gemäß einem ermittelten, beispielsweise aus mehreren vorgegebenen Beleuchtungsszenarien ausgewählten, Beleuchtungsszenario Leuchtmittel und deren gewünschte Konfiguration, d. h. zum Beispiel deren Helligkeit und/oder Farbe, festzulegen und im Folgenden durch Versenden der Beleuchtungsdaten über die Datenverbindung an die Treiberkomponenten eine entsprechende Ansteuerung der festgelegten Leuchtmittel zu veranlassen.

Durch das Speichermittel kann die Vorrichtung universell in verschiedenen Fahrzeugen mit unterschiedlicher Beleuchtungstopologie eingesetzt werden. Dabei ist es denkbar, dass im Speichermittel verschiedene Beleuchtungsszenarien, die verschiedenen Fahrzeugkonfigurationen entsprechen, gespeichert sind. Alternativ oder zusätzlich kann eine auf dem Speichermittel gespeicherte Beleuchtungstopologie auch von der Steuerkomponente verwaltet werden, zum Beispiel aktualisiert werden, wenn weitere Treiberkomponenten und daran angeschlossene Leuchtmittel hinzugefügt werden.

In einer weiteren bevorzugten Ausführungsform umfasst die Steuerkomponente ein Softwaremodul, das in einem Redundanz-Betriebsmodus der Vorrichtung in mehreren Instanzen betreibbar ist. Dadurch kann die Verfügbarkeit der Steuerkomponente sichergestellt werden.

In einer weiteren bevorzugten Ausführungsform ist die wenigstens eine Treiberkomponente mit einer weiteren Treiberkomponente über eine lokale Kommunikationsverbindung, insbesondere die Signalverbindung, signalverbunden, insbesondere in Reihe geschaltet. Die wenigstens eine Treiberkomponente ist dabei zweckmäßigerweise dazu eingerichtet, empfangene Beleuchtungsdaten oder zumindest eine daraus abgeleitete Beleuchtungsinformation über die lokale Kommunikationsverbindung an die weitere Treiberkomponente weiterzuleiten. Die wenigstens eine Treiberkomponente ist dabei mit weiteren Treiberkomponenten zweckmäßigerweise in Reihe geschaltet. Dadurch kann ein sogenanntes Daisy-Chaining realisiert werden, wodurch sich die Netzwerkadministration erleichtern bzw. der Aufwand zur Vernetzung der Treiberkomponenten, insbesondere deren Anschluss an die Datenverbindung, verringern lässt. Insbesondere müssen nicht mehr alle Treiberkomponenten direkt an die Datenverbindung angeschlossen sein oder werden. Es kann auch nur eine Treiberkomponente pro Fahrzeugabschnitt direkt an die Datenverbindung angeschlossen sein, wobei alle weiteren Treiberkomponenten mit dieser Treiberkomponente in der lokalen Kommunikationsverbindung in Reihe geschaltet sind.

Ein Beleuchtungssystem zur Beleuchtung eines Fahrzeugs, insbesondere Schienenfahrzeugs, gemäß einem dritten Aspekt der Erfindung weist wenigstens eine, insbesondere zentrale, Steuerkomponente und eine Mehrzahl an separaten, mit der Steuerkomponente über eine Datenverbindung verbundenen Treiberkomponenten auf. Zusätzlich weist das Beleuchtungssystem eine Mehrzahl an mit den Treiberkomponenten signalverbundenen Leuchtmitteln auf. Die Leuchtmittel sind dabei derart mit den Treiberkomponenten verbunden, dass mit jeder Treiberkomponente wenigstens ein Leuchtmittel über eine, insbesondere lokale, Signalverbindung verbunden ist. Die Steuerkomponente ist dazu eingerichtet, Beleuchtungsdaten über die Datenverbindung an die Treiberkomponenten zu senden. Die Treiberkomponenten sind dazu eingerichtet, auf Grundlage der Beleuchtungsdaten jeweils ein Steuersignal an wenigstens ein mit der jeweiligen Treiberkomponente signalverbundenes Leuchtmittel zu senden. In einem derartigen Beleuchtungssystem können die Leuchtmittel zentral verwaltet und eine Schaltung lokal über die Treiberkomponenten veranlasst werden. Dabei ist es aufwandsarm möglich, weitere Treiberkomponenten und daran angeschlossene Leuchtmittel hinzuzufügen und die Beleuchtung des Fahrzeugs so zu ergänzen. Neben Aufwand können so auch Kosten reduziert werden, da die Treiberkomponenten keine nennenswerte Rechenleistung erbringen müssen.

Ein Fahrzeug, insbesondere Schienenfahrzeug, gemäß einem vierten Aspekt der Erfindung weist ein Beleuchtungssystem gemäß dem dritten Aspekt der Erfindung auf. Damit lassen sich Leuchtmittel im Fahrzeug zentral verwalten. Beispielsweise kann der Betrieb einzelner Leuchtmittel gezielt zentral veranlasst werden.

In einer bevorzugten Ausführungsform sind jeweils wenigstens eine Treiberkomponente und wenigstens ein mit dieser Treiberkomponente signalverbundenes Leuchtmittel in einem von mehreren separaten Fahrzeugabschnitten angeordnet. Mithilfe der, insbesondere zentralen, Steuerkomponente kann ein Beleuchtungsszenario im Wesentlichen synchron in allen Fahrzeugabschnitten realisiert werden.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen der Erfindung näher erläutert. Soweit zweckdienlich, werden in den Figuren dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Zudem können alle in den Ausführungsbeispielen angegebenen Merkmale isoliert betrachtet und in geeigneter Weise mit den Merkmalen eines beliebigen Anspruchs kombiniert werden.

Es zeigen, zumindest teilweise schematisch:
- FIG 1: ein Beispiel eines Fahrzeugs mit einem Beleuchtungssystem;
- FIG 2: ein Beispiel eines Beleuchtungssystems für ein Fahrzeug;
- FIG 3: ein Beispiel von mehreren in einer lokalen Kommunikationsverbindung in Reihe geschalteten Treiberkomponenten; und
- FIG 4: ein Beispiel eines Verfahrens zur Beleuchtungssteuerung.

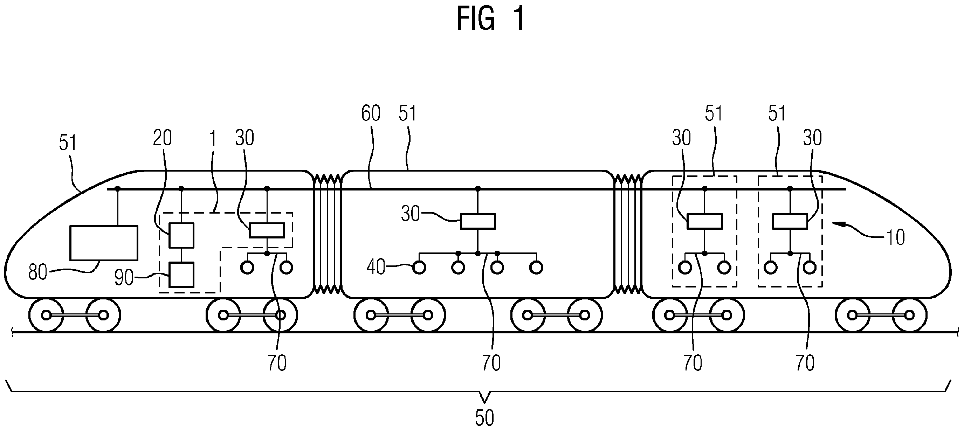

FIG 1 zeigt ein Beispiel eines Fahrzeugs 50 mit einem Beleuchtungssystem 10 zur Beleuchtung des Fahrzeugs 50. Das Beleuchtungssystem 10 umfasst eine Steuerkomponente 20, eine Mehrzahl an separaten, mit der Steuerkomponente 20 über eine Datenverbindung 60 verbundene Treiberkomponenten 30 und eine Mehrzahl an mit den Treiberkomponenten 30 über eine jeweilige Signalverbindung 70 verbundenen Leuchtmitteln 40, von denen aus Gründen der Übersichtlichkeit nur eines mit einem Bezugszeichen versehen ist. Die Steuerkomponente 20 hat Zugriff auf ein Speichermittel 90.

Im vorliegenden Beispiel handelt es sich bei dem Fahrzeug 50 um einen Zug mit drei Wagen. Hierbei ist an die Datenverbindung 60 ebenfalls eine Zugsteuerung 80 (englisch "Train Control and Management System", TCMS) angeschlossen, also ein zentraler Server, auf dem Software zur Steuerung des Zugs gehostet werden kann.

Die Steuerkomponente 20 ist vorzugsweise dazu eingerichtet, Beleuchtungsdaten über die Datenverbindung 60 an die Treiberkomponenten 30 zu senden. Solche Beleuchtungsdaten können beispielsweise eine Information bezüglich der Art und/oder Anzahl der einzusetzenden Leuchtmittel 40, eine Information bezüglich der einzustellenden Helligkeit der Leuchtmittel 40 und/oder eine Information bezüglich der einzustellenden Farbe der Leuchtmittel 40 enthalten. Die Treiberkomponenten 30 sind zweckmäßigerweise entsprechend dazu eingerichtet, auf Grundlage der Beleuchtungsdaten jeweils ein Steuersignal an die mit der jeweiligen Treiberkomponente 30 signalverbundenen Leuchtmittel 40 zu senden. Die Steuerkomponente 20 kann so die Beleuchtung im Fahrzeug 50 zentral verwalten. Insbesondere kann die Steuerkomponente 20 gezielt die Beleuchtung gemäß einem gewünschten Beleuchtungsszenario zentral veranlassen. Das Beleuchtungsszenario wird dann lokal von den Treiberkomponenten 30 durch entsprechende Ansteuerung der Leuchtmittel 40 umgesetzt.

Die beiden ersten Wagen des Zugs bilden jeweils einen Fahrzeugabschnitt 51. Gegebenenfalls können aber auch innerhalb eines Wagens weitere Fahrzeugabschnitte vorgesehen sein, wie dies im dritten Wagen rein beispielhaft durch gestrichelte Rechtecke angedeutet ist.

Im vorliegenden Beispiel ist jedem Fahrzeugabschnitt 51 eine Treiberkomponente 30 zugeordnet, und die an diese Treiberkomponente 30 angeschlossenen Leuchtmittel 40 sind innerhalb des Fahrzeugabschnitts 51 angeordnet. Alternativ oder zusätzlich können aber in zumindest einem der Fahrzeugabschnitte 51 auch mehrere Treiberkomponenten 30 mit jeweils wenigstens einem daran angeschlossenen Leuchtmittel 40 vorgesehen sein. In jedem Fall kann die Steuerkomponente 20 durch Senden der Beleuchtungsdaten an die Treiberkomponenten 30 eine gewünschte Ansteuerung der Leuchtmittel 40 veranlassen, beispielsweise um ein gewünschtes Beleuchtungsszenario zu realisieren. Da die Beleuchtungsdaten über die Datenverbindung 60 gleichzeitig an alle Treiberkomponenten 30 gesendet werden und die Erzeugung von entsprechenden Steuersignalen durch die Treiberkomponenten 30 praktisch keine Rechenleistung erfordert, können Wechsel zwischen zwei Beleuchtungsszenarien im Wesentlichen in allen Fahrzeugabschnitten 51 synchron erfolgen.

Bei der Datenverbindung 60 kann es sich um ein konventionelles Zugnetzwerk handeln. Die Datenverbindung 60 kann beispielsweise eine Ethernet-Verbindung sein. Alternativ kann die Datenverbindung 60 aber auch eine dedizierte Datenverbindung sein, beispielsweise gebildet von einem dedizierten Kabel. Insbesondere kann die Datenverbindung 60 eine serielle Verbindung zwischen der Steuerkomponente 20 und den Treiberkomponenten 30 sein. Die Datenverbindung 60 kann aber auch drahtlos ausgebildet sein.

Die Signalverbindungen 70 sind zweckmäßigerweise lokale Verbindungen zwischen der jeweiligen Treiberkomponente 30 und den daran angeschlossenen Leuchtmitteln 40. Die Signalverbindungen 70 sind hierbei auf den jeweiligen Fahrzeugabschnitt 51 beschränkt. Es ist allerdings auch denkbar, dass die Signalverbindungen 70 über mehr als einen Fahrzeugabschnitt 51 verlaufen. Bei den Signalverbindungen 70 kann es sich beispielsweise um einen Bus handeln, beispielsweise einen PWM Bus oder einen auch als "Smart Bus" bezeichneten seriellen Bus.

Zweckmäßigerweise kann die Steuerkomponente 20 über die Datenverbindung 60 Betriebsdaten empfangen, zum Beispiel von der Zugsteuerung 80. Diese Betriebsdaten charakterisieren zweckmäßigerweise den Betriebszustand des Fahrzeugs 50. Die Betriebsdaten können entsprechend eine Information darüber enthalten, ob das Fahrzeug 50 gegenwärtig mit hoher Geschwindigkeit fährt, sich gerade einem Halt nähert und dabei seine Geschwindigkeit reduziert, angehalten hat, Türen des Fahrzeugs 50 geöffnet werden oder sind, eine Fahrgastinformation über ein Fahrgastinformationssystem des Fahrzeugs 50 ausgegeben wird, ob und gegebenenfalls wenn ja, welcher Defekt des Fahrzeugs 50 vorliegt und/oder dergleichen. Die Betriebsdaten können auch eine Umgebungsinformation wie die gegenwärtige Uhrzeit, das gegenwärtige Datum, die gegenwärtige Wetterlage, die gegenwärtige Lufttemperatur und/oder -feuchtigkeit und/oder dergleichen enthalten. Anhand dieser Betriebsdaten kann die Steuerkomponente 20 ein Beleuchtungsszenario ermitteln.

Vorzugsweise kann die Steuerkomponente 20, zweckmäßigerweise auf Grundlage der Betriebsdaten, eines von mehreren vorgegebenen Beleuchtungsszenarien auswählen. Jedes dieser vorgegebenen Beleuchtungsszenarien ist dabei zweckmäßigerweise auf einen Betriebszustand des Fahrzeugs 50 zugeschnitten. Dadurch kann der Fahrkomfort von Passagieren des Fahrzeugs 50 erhöht oder die Aufmerksamkeit der Passagiere gewonnen und gegebenenfalls gezielt gelenkt werden.

Beispielsweise kann Abends oder Nachts die Beleuchtung gedimmt und/oder der Farbton geändert, die Beleuchtung bei Anfahrt eines Halts erhöht, ein Türbereich mit geöffneten Türen mit Spotleuchten ausgeleuchtet, bei Ausgabe einer Fahrgastinformation Signalleuchten eingeschaltet werden und/oder dergleichen.

Die vorgegebenen Beleuchtungsszenarien können dabei im Speichermittel 90 gespeichert sein.

Alternativ oder zusätzlich kann im Speichermittel 90 auch eine Beleuchtungstopologie gespeichert sein, welche die Beleuchtungsoptionen im Fahrzeug 50 charakterisiert. Anhand der Beleuchtungstopologie kann die Steuerkomponente 20 festlegen, wie das Beleuchtungsszenario umgesetzt wird. Beispielsweise kann die Steuerkomponente anhand der Beleuchtungstopologie entscheiden, welche der zur Verfügung stehenden Leuchtmittel 40 in den Fahrzeugabschnitten 51 aktiviert und/oder mit welcher Helligkeit und/oder mit welcher Farbe betrieben werden sollen. Zweckmäßigerweise enthält die Beleuchtungstopologie zu diesem Zweck auch eine Information darüber, wie die einzelnen Leuchtmittel 40 in den unterschiedlichen Fahrzeugabschnitten 51 zu adressieren sind. Auf Grundlage des ermittelten Beleuchtungsszenarios und/oder der Beleuchtungstopologie kann die Steuerkomponente 20 dann eine entsprechende Ansteuerung der entsprechenden Leuchtmittel 40 durch die Treiberkomponenten 30 veranlassen. Dazu erzeugt die Steuerkomponente 20 zweckmäßigerweise entsprechende Beleuchtungsdaten und sendet sie über die Datenverbindung 60 an die Treiberkomponenten 30.

Wie in FIG 1 gezeigt kann das Speichermittel 90 Teil einer Vorrichtung 1 sein, welche neben der Steuerkomponente 20 auch wenigstens eine Treiberkomponente 30 umfasst. Insbesondere kann das Speichermittel 90 direkt mit der Steuerkomponente 20 verbunden oder sogar Teil von ihr sein. Alternativ kann das Speichermittel 90 aber auch separat vorgesehen und beispielsweise ebenfalls über die Datenverbindung 60 mit der Steuerkomponente 20 verbunden sein.

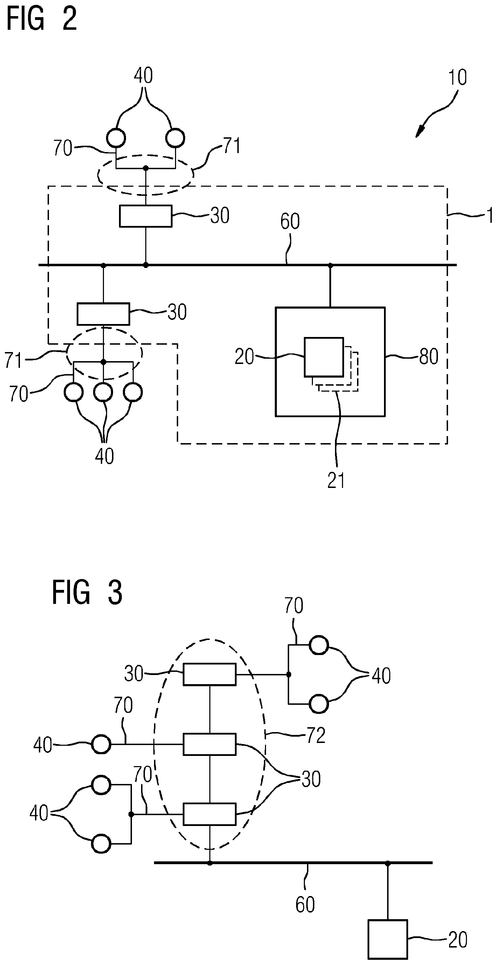

Die Steuerkomponente 20 ist im vorliegenden Beispiel als dedizierte Hardwarekomponente ausgebildet, auf der gegebenenfalls ein entsprechendes Softwaremodul gehostet ist. Alternativ ist es aber auch denkbar, dass die Steuerkomponente 20 im Wesentlichen vollständig als Softwaremodul ausgebildet ist, das auf einer ohnehin in Fahrzeug 50 vorgesehenen Hardware gehostet werden kann. Anders gesagt kann die Steuerkomponente 20 auch virtuell ausgebildet sein, wie in FIG 2 gezeigt ist.

FIG 2 zeigt ein Beispiel eines Beleuchtungssystems 10 für ein Fahrzeug. In dem Beleuchtungssystem 10 ist eine Steuerkomponente 20 über eine Datenverbindung 60 mit mehreren Treiberkomponenten 30 verbunden. Jede der Treiberkomponenten 30 ist mit wenigstens einem Leuchtmittel 40 über eine Signalverbindung 70 verbunden. Bei der Signalverbindung 70 kann es sich zum Beispiel um einen lokalen Bus 71 handeln.

Im Unterschied zur in FIG 1 gezeigten Steuerkomponente 20 ist diese in FIG 2 als Softwaremodul ausgebildet. Dadurch kann die Vorrichtung 1 in einem Redundanz-Betriebsmodus betrieben werden, in dem mehrere Instanzen 21 der Steuerkomponente 20 ausgeführt werden. Folglich lässt sich die Verfügbarkeit der Steuerkomponente 20 sicherstellen oder zumindest erhöhen.

Die als Softwaremodul ausgebildete Steuerkomponente 20 wird im gezeigten Beispiel von einer Zugsteuerung 80, d.h. einem zentralen Fahrzeugserver, gehostet. Dadurch kann die Steuerkomponente besonders leicht und ohne oder zumindest mit nur sehr geringer Latenz auf eine Betriebsinformation des Fahrzeugs zugreifen.

FIG 3 zeigt ein Beispiel von mehreren in einer lokalen Kommunikationsverbindung 72, zum Beispiel einem lokalen Bus, in Reihe geschalteten Treiberkomponenten 30. Jede der Treiberkomponenten ist über eine Signalverbindung 70 mit wenigstens einem Leuchtmittel 40 verbunden. Die lokale Kommunikationsverbindung 72 kann dabei die Signalverbindung(en) 70 umfassen. Insbesondere können die Leuchtmittel 40 und die Treiberkomponenten 30 über denselben lokalen Bus signalverbunden sein.

Eine der Treiberkomponenten 30 ist zweckmäßigerweise über eine Datenverbindung 60 mit einer Steuerkomponente 20 verbunden, um über die Datenverbindung 60 Beleuchtungsdaten von der Steuerkomponente 20 zu empfangen. Vorzugsweise kann die direkt an die Datenverbindung 60 angeschlossene Treiberkomponente 30 die Beleuchtungsdaten an die weiteren, innerhalb der Kommunikationsverbindung 72 in Reihe geschalteten Treiberkomponenten 30 weiterleiten. Zu diesem Zweck kann die Treiberkomponente 30 auch dazu eingerichtet sein, die Beleuchtungsdaten in entsprechende Steuersignale umzuwandeln, die über die lokale Kommunikationsverbindung 72 an die weiteren Treiberkomponenten 30 übermittelbar sind. Insbesondere können die Beleuchtungsdaten die an die Datenverbindung 60 angeschlossene Treiberkomponente 30 veranlassen, Steuersignale über die Kommunikationsverbindung 72 auszusenden, welche die weiteren Treiberkomponenten 30 dazu veranlassen, die Leuchtmittel 40 gemäß der Beleuchtungsdaten anzusteuern.

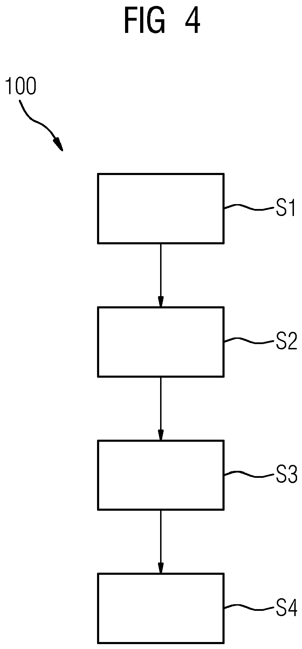

FIG 4 zeigt ein Beispiel eines Verfahrens 100 zur Beleuchtungssteuerung in einem Fahrzeug, insbesondere Schienenfahrzeug. In einem Verfahrensschritt S1 empfängt eine Steuerkomponente Betriebsdaten des Fahrzeugs. Auf Grundlage der Betriebsdaten ermittelt die Steuerkomponente ein Beleuchtungsszenario, zum Beispiel durch Auswahl aus mehreren vorgegebenen, an verschiedene Betriebszustände des Fahrzeugs angepasste Beleuchtungsszenarien.

In einem optionalen weiteren Verfahrensschritt S2 ruft die Steuerkomponente eine auf einem Speichermittel gespeicherte Beleuchtungstopologie ab und erzeugt auf Grundlage der Beleuchtungstopologie Beleuchtungsdaten. Zweckmäßigerweise charakterisieren die Beleuchtungsdaten das Beleuchtungsszenario und sind geeignet, über das Fahrzeug verteilte Treiberkomponenten zur entsprechenden Ansteuerung von ebenfalls im Fahrzeug verteilten Leuchtmitteln zu veranlassen.

Dabei können die gemäß der Beleuchtungstopologie zur Verfügung stehenden Leuchtmittel und Konfigurationsmöglichkeiten dieser Leuchtmittel auf Grundlage der Betriebsdaten bzw. des darauf basierenden Beleuchtungsszenarios ausgewählt werden.

In einem weiteren Verfahrensschritt S3 sendet die Steuerkomponente dann die entsprechenden Beleuchtungsdaten über eine Datenverbindung an wenigstens eine separate Treiberkomponente, um die gewünschte Ansteuerung der Leuchtmittel zu veranlassen. In einem weiteren Verfahrensschritt S4 sendet die Treiberkomponente auf Grundlage der Beleuchtungsdaten ein Steuersignal über eine Signalverbindung an wenigstens ein Leuchtmittel. Dadurch kann die lokale Umsetzung des Beleuchtungsszenarios zentral veranlasst werden.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren (100) zur Beleuchtungssteuerung in einem Fahrzeug (50), insbesondere Schienenfahrzeug, wobei eine Steuerkomponente (20) Beleuchtungsdaten über eine Datenverbindung (60) an wenigstens eine separate Treiberkomponente (30) sendet (S3) und die Treiberkomponente (30) auf Grundlage der Beleuchtungsdaten ein Steuerungssignal über eine Signalverbindung (70) an wenigstens ein Leuchtmittel (40) sendet (S4).

2. Verfahren (100) nach Anspruch 1, wobei die Steuerkomponente (20) Betriebsdaten des Fahrzeugs (50) empfängt (S1), auf Grundlage dieser Betriebsdaten ein Beleuchtungsszenario ermittelt und Beleuchtungsdaten, die durch das ermittelte Beleuchtungsszenario charakterisiert sind, an die Treiberkomponente (30) sendet (S3).

3. Verfahren (100) nach Anspruch 1 oder 2, wobei die Steuerkomponente (20) eine auf einem Speichermittel (90) gespeicherte Beleuchtungstopologie abruft und auf Grundlage der Beleuchtungstopologie die Beleuchtungsdaten erzeugt (S2).

4. Verfahren (100) nach einem der vorangehenden Ansprüche, wobei die Treiberkomponente (30) bei Herstellen der Datenverbindung (60) mit der die Steuerkomponente (20) Konfigurationsdaten, welche die Konfiguration der Treiberkomponente (30) charakterisieren, über die Datenverbindung (60) an die Steuerkomponente (20) sendet.

5. Verfahren (100) nach Anspruch 4, wobei die Konfigurationsdaten eine Information zu den von der Treiberkomponente (30) steuerbaren Leuchtmitteln (40) enthält.

6. Verfahren (100) nach einem der vorangehenden Ansprüche, wobei die Treiberkomponente (30) die Beleuchtungsdaten über eine lokale Kommunikationsverbindung (72) an eine mit der Treiberkomponente (30) in der Kommunikationsverbindung (72) in Reihe geschalteten, weitere Treiberkomponente (30) weiterleitet.

7. Vorrichtung (1) zur Beleuchtungssteuerung in einem Fahrzeug (50), insbesondere Schienenfahrzeug, mit einer Steuerkomponente (20) und wenigstens einer separaten Treiberkomponente (30), die mit der Steuerkomponente (20) datenverbunden ist,
wobei die Steuerkomponente (20) dazu eingerichtet ist, Beleuchtungsdaten über die Datenverbindung an die Treiberkomponente (30) zu senden (S3), und die Treiberkomponente (30) dazu eingerichtet ist, auf Grundlage der Beleuchtungsdaten ein Steuerungssignal an wenigstens ein mit der Treiberkomponente (30) signalverbundenes Leuchtmittel (40) zu senden (S4).

8. Vorrichtung (1) nach Anspruch 7, wobei die Beleuchtungsdaten eine Information zur Adressierung wenigstens eines Leuchtmittels (40), eine Information zu einer Helligkeit und/oder eine Information zu einer Farbe enthalten.

9. Vorrichtung (1) nach Anspruch 7 oder 8 mit einem Speichermittel (90), auf dem eine Beleuchtungstopologie des Fahrzeugs (50) gespeichert ist, wobei die Steuerkomponente (20) zum Erzeugen (S2) der Beleuchtungsdaten auf Grundlage der Beleuchtungstopologie eingerichtet ist.

10. Vorrichtung (1) nach einem der Ansprüche 7 bis 9, wobei die Steuerkomponente (20) ein Softwaremodul umfasst, das in einem Redundanz-Betriebsmodus der Vorrichtung (1) in mehreren Instanzen (21) betreibbar ist.

11. Vorrichtung (1) nach einem der Ansprüche 7 bis 10, wobei die wenigstens eine Treiberkomponente (30) mit einer weiteren Treiberkomponente (30) über eine lokale Kommunikationsverbindung (72) signalverbunden ist.

12. Beleuchtungssystem (10) zur Beleuchtung eines Fahrzeugs (50), insbesondere Schienenfahrzeugs, mit
- einer Steuerkomponente (20),
- einer Mehrzahl an separaten, mit der Steuerkomponente (20) über eine Datenverbindung (60) verbundenen Treiberkomponenten (30) und
- einer Mehrzahl an derart mit den Treiberkomponenten (30) signalverbundenen Leuchtmitteln (40), dass mit jeder Treiberkomponente (30) wenigstens ein Leuchtmittel (40) über die Signalverbindung (70) verbunden ist,
wobei die Steuerkomponente (20) dazu eingerichtet ist, Beleuchtungsdaten über die Datenverbindung (60) an die Treiberkomponenten (30) zu senden (S3), und die Treiberkomponenten (30) dazu eingerichtet sind, auf Grundlage der Beleuchtungsdaten jeweils ein Steuerungssignal an wenigstens ein mit der jeweiligen Treiberkomponente (30) signalverbundenes Leuchtmittel (40) zu senden (S4).

13. Fahrzeug (50), insbesondere Schienenfahrzeug, mit einem Beleuchtungssystem nach Anspruch 12.

14. Fahrzeug (50) nach Anspruch 13, wobei jeweils wenigstens eine Treiberkomponente (30) und wenigstens ein damit signalverbundenes Leuchtmittel (40) in einem von mehreren separaten Fahrzeugabschnitten (51) angeordnet sind.
